Europäisches Patentamt

European Patent Office

Office européen des brevets

(19)

(11) Veröffentlichungsnummer: **0 074 549**

**A2**

(12) **EUROPÄISCHE PATENTANMELDUNG**

(21) Anmeldenummer: **82107932.4**

(22) Anmeldetag: **28.08.82**

(51) Int. Cl.³: **B 23 Q 1/18**

(30) Priorität: **16.09.81 DE 3136654**

(43) Veröffentlichungstag der Anmeldung:
**23.03.83 Patentblatt 83/12**

(84) Benannte Vertragsstaaten:
**DE FR GB IT SE**

(71) Anmelder: **ZAHNRADFABRIK FRIEDRICHSHAFEN
AKTIENGESELLSCHAFT
Löwentaler Strasse 100 Postfach 2520
D-7990 Friedrichshafen 1(DE)**

(72) Erfinder: **Manogg, Horst, Ing.grad.
Lange Gasse 1
D-7770 Überlingen(DE)**

(72) Erfinder: **Bodenmiller, Alfons
Weiherstrasse 14
D-7990 Friedrichshafen 5(DE)**

(72) Erfinder: **Hörl, Adolf, Ing.grad.
Auerhahnweg 8
D-7990 Friedrichshafen(DE)**

(54) **Linearverschieblicher Arbeitsarm, insbesondere für Handhabungsgeräte.**

(57) Bei diesem linearverschieblichen Arbeitsarm 1 ist dessen Schlittenkonstruktion 4, 5 aus mehreren, etwa mit dem ersten Teilstück 4 gleichlangen Teilstücken 5, 6 etc. so zusammenschiebbar ausgestaltet, daß die Gesamtlänge des Minimalhubes etwa gleich der Länge eines Teilstückes ist.

Die Betätigung erfolgt über einen einzigen Lineartrieb 11 derart, daß stets die günstigste Abstützung mit etwa gleichweiten Vorkragungen und gleichlanger Führung gesichert ist. Die Teilstücke am Beginn des Arbeitsarmes haben U-Querschnitte und durch eine Lagernachstellbarkeit, die ständig wirkt, werden Führungsspiele weitestgehend ausgeglichen. Der Lineartrieb 11 ist vorzugsweise ein Stellzylinder, der nur eines der per Zwischengetriebe 13 aneinandergekoppelten Teilstücke verschiebt. Das letzte, äußere Teilstück 6 ist als Rohr ausführbar um Wärmeeinwirkungen und Beschädigungsgefahren auszuschließen.

EP 0 074 549 A2

./...

FIG.2

Die Erfindung betrifft einen linearverschieblichen Arbeitsarm, insbesondere für Handhabungsgeräte, der einen gegenüber
einer Basis translatorisch ortsveränderlichen Greifer- bzw.
Werkzeug-Arm aufweist und geht aus von einem Stand der Technik,
wie er beispielsweise aus dem Prospekt F 43238/RT 3325-381 der
Anmelderin ersichtlich ist.

Bei dieser, schon lange weitverbreiteten Bauart von Arbeitsarmen wird, gegebenenfalls in seinem gesamten Schwenkbereich, auf
der dem eigentlichen Arbeitsbereich gegenüberliegenden Seite
seiner Befestigungsbasis nochmals etwa gleich viel Platz benötigt, um das Zurückfahren des unverkürzbaren Greiferarmes
kollisionsfrei zu ermöglichen.

Dieser, für die eigentliche Aufgabe nicht benötigte Platzbedarf wirkt sich auf die Einsatzmöglichkeiten von Handhabungsgeräten aller Verwendungsarten um so mehr hemmend aus, als der
Platzbedarf für Steuerschränke etc., welche bisher unter diesem
Freiraum angeordnet wurden, aufgrund der Miniaturisierungserfolge bei den selben unnötig wird.

Ansich naheliegende Überlegungen, mit Teleskoprohren eine
befriedigende Platzersparnis zu erreichen, wurden aufgegeben,
nachdem die Probleme einer in allen Positionen sicher zu stellenden Spielfreiheit und Steifigkeit unter Verschmutzungsverhütung
und Zugänglichkeit der Einbauteile erkannt worden waren.
Auch auf der Basis zusammenknickender Mehrgelenkarme realisierte
Lösungsversuche befriedigten wegen der Verteuerung und wegen
ihrer Belastbarkeitsgrenzen nicht.

Als bedarfsgerecht wird nämlich heute ein Arbeitsarm erst
dann angesehen, wenn nicht nur sein Raumbedarf etwa auf den gleichen Bedarf wie für einen Arbeiter beschränkbar ist, sondern auch
seine Belastbarkeit und Präzision die eines Arbeiters bei vergleichbaren Zugriffsmöglichkeiten mindestens erreicht.

Akte 5791 F

0074549

Aufgabe der im Anspruch 1 angegebenen Erfindung ist es daher, einen Arbeitsarm mit Linearverschieblichkeit zu schaffen, der auf der dem eigentlichen Arbeitsbereich jeweils gegenüberliegenden Seite seiner Befestigungsbasis keinen, bzw. nur einen minimalen zusätzlichen Platz beim Zurückfahren des Greiferarmes erfordert und der auch bei günstigem Aufwand noch in zuverlässiger Weise auch bei großer Ausladung und schweren Lasten noch genügend schnell, steif und spielfrei einsetzbar ist.

Diese Aufgabe wird durch das Kennzeichen des Anspruchs 1 gelöst, mit welchem erreicht wird, daß beim Zurückziehen des Greiferarmes sich die gesamte, für den Maximalhub nötige Schlittenkonstruktion ähnlich dem ansich bekannten Lafettenprinzip auf etwa nur eine Teilstücklänge verkürzen läßt, ohne auf der Geräterückseite noch besonderen Platz zu benötigen.
Weitere vorteilhafte Ausgestaltungen der Erfindung werden durch die Unteransprüche beschrieben.
Nach Anspruch 2 wird erreicht, daß für die gleichzeitigen Verschiebungen aller Teilstücke einschließlich des Greiferendstückes nur ein gemeinsamer Lineartrieb notwendig ist. Und daß der Greifer davon unabhängig auch während der Bewegung betätigbar bleibt.

Nach Anspruch 3 wird erreicht, daß die Auseinanderschiebung der Teilstücke unter jeweils nur so weitem Herausfahren aus den Führungen erfolgt, daß jedes Teilstück noch mit vorteilhaftester Abstützung in der Führung gehalten ist.

Nach Anspruch 4 wird erreicht, daß die Teilstücke eine sowohl der Zugänglichkeit der in ihnen eingebauten Antriebs- und Steuerungselemente dienliche längliche Öffnung auf der einen Seite haben können, als auch damit eine hohe Biegesteifigkeit ergeben, bei der die Schwerachse der Profile statisch günstig dicht an der Basis des Arbeitsarms gelegen sind. Schon mit relativ kleinen Profilhöhen ist daher die Konstruktion relativ hoch belastbar.

Akte 5791 F

Nach Anspruch 5 wird erreicht, daß für alle Einstellungen des Arbeitsarmes ein wirksamer und gegebenenfalls überall auch nachregulierbarer Spielausgleich gegeben ist.

Nach Anspruch 6 wird erreicht, daß die Triebverbindung von einem einfachen und leichten Ritzel, das leicht auswechselbar ist, im Zusammenwirken mit (ebenfalls zur Biegesteifigkeit beitragenden) Zahnstangen geschützt eingebaut und mit kurzen Energie bzw. Steuerleitungen versorgt werden kann. Trotz des Einbaues in einen ohnehin vorhandenen Hohlraum bleibt dabei die Nachregulierbarkeit des Abstandes zwischen den Teilstücken über genau einstellbare Führungen erhalten.

Nach Anspruch 7 wird erreicht, daß sich durch den symmetrischen Doppeleingriff des Ritzels die in den Innenraum des Teilstückquerschnittes hineinschiebbare Zahnstangenanordnung eine besonders kompakte Getriebeanordnung ergibt, welche bei allen Stellungen etwa gleich gute Kraftübertragungsbedingungen sicherstellt.

Nach Anspruch 8 wird erreicht, daß bei allen Stellungen der Teilstücke ein Spielausgleich über eine einfache Anpressrolle wirkt, die auch kraftübertragungsgünstig und schmutzsicher im Innenraum angeordnet ist.

Nach Anspruch 9 wird erreicht, daß auch für den Stellzylinder, der hier ohne Teleskope oder dergleichen ausführbar ist, keine zusätzlichen Ausfahrlängen vorgesehen werden müssen.

Nach Anspruch 10 wird erreicht, daß im Bereich geringer Biegemomente und höherer Beschädigungsgefahren am Ende des Greiferarmes ein Übergang vom offenen, bzw. mit Faltenbalg abgedecktem U-Querschnitt auf ein geschlossenes Rohr geschaffen wird.

Nach Anspruch 11 wird erreicht, daß auch vor dem Übergang zum rohrförmigen Teilstück schon ein auch zur Aufnahme der Seiten-

Akte 5791 F

kräfte aus dem Greifer günstigerer Rohrquerschnitt, der auch die Führungen des letzten Teilstückes allseits umfaßt, vorgesehen ist.

Nach Anspruch 12 wird erreicht, daß das Rohrstück auch die Nachstell- und Meß-Einrichtungen schützend umfaßt.

Nach Anspruch 13 wird erreicht, daß die Stützrollen für die Nachjustierung leicht zugänglich von den Außenseiten der Teilstückprofile her anordenbar sind und die Prismenprofile insbesondere im Zustand ungünstigster Belastung die Versteifungswirkung der Teilstückprofile verbessern.

Nach Anspruch 14 wird erreicht, daß durch den Einbau verschieden großer Ritzel bzw. abgestufter Doppelritzel Übersetzungsverhältnisse für den Vorschub wählbar sind, welche beispielsweise leichtere Vorderarm-Teilstücke schneller und/oder weiter verschieben können, als die schwereren Hinterarm-Teilstücke in der Nähe der Basis, oder aber eine Zugriff-Synchronisierung ermöglichen wenn mehrere Arbeitsarme für verschiedene Zugrifflängen gemeinsam eingesetzt werden sollen.

Die Erfindung wird im folgenden anhand schematischer Zeichnungen noch näher erläutert.

Fig. 1   ist eine Darstellung, die eine bevorzugte Ausführungsform des Arbeitsarmes mit einem starren und zwei beweglichen Teilstücken in der auf Minimalhub zusammengeschobenen Ausgangsstellung zeigt. Über die etwa gleichlangen Teilstücke hinaus ragt hier nur der Greiferkopf.

Fig. 2   zeigt das gleiche Grundprinzip des Arbeitsarmes, jedoch mit der extremen Maximalhub-Einstellung des Arbeitsarmes.

Fig. 3   zeigt einen Querschnitt durch die Schlittenkonstruktion mit den U-förmigen vorderen und dem hinteren Rohr-Querschnitt.

Akte 5791 F

Im Ausführungsbeispiel ist der Arbeitsarm 1 mittels einer hier aus zwei Laschen bestehenden Halterung 2 an einer beliebigen Befestigungsbasis 3 festgehalten, indem das erste Teilstück mit der Halterung 2 direkt einstückig ausgebildet ist. Einfachheitshalber sind hier nur eine Minimalzahl an Teilstücke 4, 5, 6, 7 des Arbeitsarmes gezeigt und zwar sind das erste 4 und das weitere 5, zweites, bzw. hier vorletztes von ineinanderschiebbaren U-Profilen, deren Stege 8, 9 zweckmäßigerweise in Richtung höchster Biegemomente und nächstmöglich zur Halterung 2 angeordnet sind. Das letzte Teilstück 6 ist im Beispiel zwecks Verschmutzungsschutz als Rohr 10 ausgebildet, könnte aber auch z. B. ein U-Profil sein. Das Greifer- bzw. Werkzeug-Element 7 bildet den Abschluß des letzten Teilstück 6. An der Halterung 2 ist ein parallel zur Laufrichtung L wirkender Linearantrieb 11 über eine Stützverbindung 12 befestigt, welcher neben der auch von ihr mitgetragenen ersten Zahnstange 13 in den Innenraum 14 der ineinanderschiebbaren U-Querschnitte hineinragt, aber dort im Gegensatz zur ersten Zahnstange 13 nicht relativ beweglich sondern an einer Deckelplatte 15 angelegt ist. Die Deckelplatte ist mit dem zweiten Teilstück 5 verbunden welches somit über die zweite Befestigung 16 des Linearantriebes verschoben werden kann.

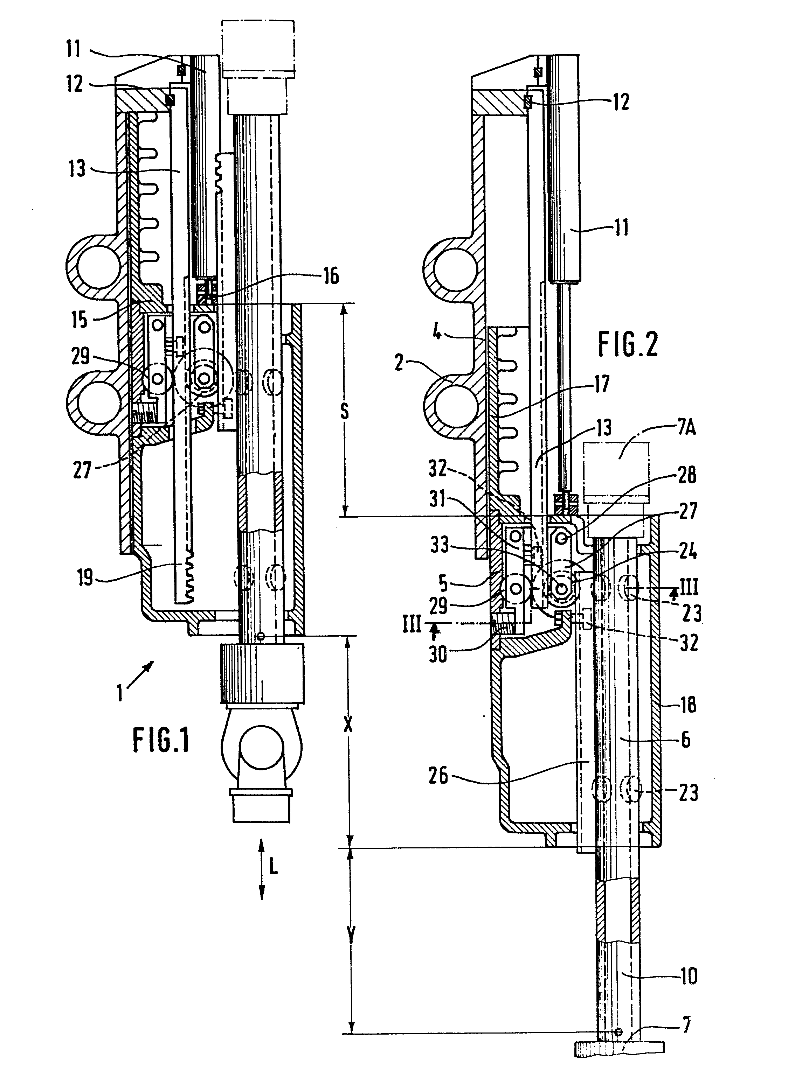

Bei Hubvergrößerung des Lineartriebes 11 um seinen ganzen Stellhub S (siehe Fig. 2) befindet sich die Deckelplatte 15, welche den Übergang einer U-förmigen Hälfte 17 des zweiten Teilstückes 5 zu einer greiferseitigen, als Rohrstück 18 ausgestalteten Hälfte bildet, am greiferseitigen Ende des zweiten Teilstückes 4. Dazu sind die Länge der U-förmigen Hälfte 17 und der Stellhub S etwa gleich und die erste Zahnstange 13 etwa doppelt so lang, wobei auch ihr vorderes Ende vom Rohrstück 18 auch im zusammengeschobenen Zustand (Fig. 1) noch voll überdeckt wird.

Das erste Teilstück 4 ist mit seinen Seitenteilen 20 über Linearlagerhälften, die hier aus am weiteren Teilstück 5 befestigten Prismenprofilen 21 und sich dagegen abstützenden in den Seitenteilen 20 nachstellbar eingebauten Stützrollen 22 bestehen, formschlüssig mit dem weiteren Teilstück 5 zusammenschiebbar.

Akte 5791 F

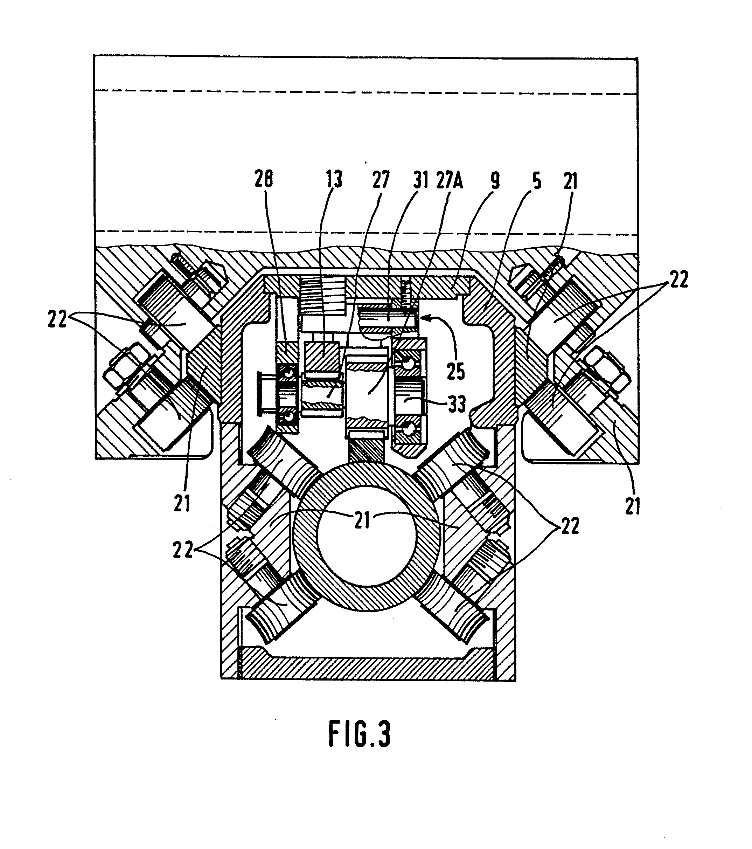

Dazu weist dieses einen entsprechend verkleinerten U-Querschnitt auf. Bei der im vorliegenden Beispiel dargestellten
Ausführung des Arbeitsarmes 1, bei welcher das zweite Teilstück 5 auch das vorletzte ist und mit einen als Rohr 10 ausgebildeten letzten Teilstück 6 zusammenwirkt, geht der U-Querschnitt des zweiten Teilstückes 5 etwa auf dessen halber Länge
in das schon erwähnte Rohrstück 18 über, welches ebenfalls eine
Triebverbindung 24 und eine Einrichtung zur Lagerspielreduzierung 25 abdeckt. Die Triebverbindung besteht im wesentlichen
aus einem sowohl mit der ersten als auch einer zweiten Zahnstange 26 am letzten Teilstück 6 befestigten und zwischen ihnen kämmendem Ritzel 27. Dieses ist am zweiten Teilstück 5 in einem
nachstellbaren Lagerbock 28 gelagert und durch eine darin ebenfalls gelagerte Anpressrolle 29, die gegen die Rückseite der
ersten Zahnstange 13 anpressbar ist, zusammengefaßt.
Durch eine Nachstellschraube 30 in einer Schwinge 31 mit Gelenk
32 wird die Anpressrolle in Richtung des Ritzels so gegen die
Zahnstange gepresst, daß beide Zahnstangen 13 und 26 stets praktisch sp lfreie Eingriffsverbindung mit dem Ritzel haben. Bei
Ausführung des Ritzels als zweistufiges Doppelritzel 27a (s. Fig.3)
kann dieses auch wahlweise mit einer Übersetzungs-Wirkung ausgeführt werden. Da als Rohr 10 ausgeführte letzte Teilstück 6,
welches durch gegen die zweite Zahnstange 26 anliegende Führungsrollen gegen Verdrehung gesichert ist, ist ebenfalls durch im
Körper des Rohrstückes 18 angeordnete Führungsrollen 32 allseitig gegen Prismenlaufbahnen abgestützt.
Je nach Verwendungszweck kann das Rohr 10 sowohl am einen als
auch am anderen Ende dann Greifer- bzw. Werkzeug-Endstück 7, 7a
ausgestattet sein. Diese Möglichkeit erleichtert den Einsatz des
Arbeitsarmes auch für Fälle, bei denen nacheinander verschiedene
Werkzeuge an den gleichen Zugriffsort gebracht werden müssen.
Mit einer180 °-Schwenkung der Befestigungsbasis würde so ein Greifer- bzw. Werkzeug-Wechsel ganz kurzfristig ohne Umrüstung erfolgen können, ohne weiteren Standplatz für einen Zusatzgreifer
zu erfordern. Im Ausführungsbeispiel wird die Welle 33 des

Akte 5791 F

Ritzels 27 noch zu einem Längenabgriff mittels eines ihr z. B. mittels Zahnriemenabgriff unmittelbar angekoppelten Meßgetriebes 34 genutzt, welches im Freiraum des Rohrstückes neben der ersten Zahnstange 13 die ebenfalls zusammen mit Energie- und Steuerkabel-Anschlüssen etc. günstig geschützt unterbringbar ist.

Das wirkungsgleiche Antriebs- und Führungs-Prinzip wie im Beispiel zwischen den Teilstücken 5 und 6 gezeigt, kann selbstverständlich auch leicht realisiert werden, wenn 6 kein Rohr sondern noch ein weiteres U-Profil ist, oder aber wenn auch zwischen einem dritten und einem vierten Teilstück jeweils noch eine weitere Triebverbindung 24 vorgesehen werden soll.

Dort wo es zwecks auch radialer Platzersparnis erforderlich ist, können selbstverständlich die Zahnstangen bei entsprechend angepaßtem Ritzelgetriebe, ohne das Erfindungsprinzip zu verlassen, auch unter Beibehaltung ihrer axialen Abstützungen derart seitenversetzt untergebracht werden, daß das letzte Teilstück 6 unmittelbar innerhalb der Führungen der U-Querschnitte läuft.

Der Erfindungsgedanke wird offensichtlich auch dann nicht verlassen, wenn aus Energieversorgungsgründen beispielsweise von einem Elektromotor ausgehend das Ritzel direkt rotatorisch angetrieben werden soll.

Akte 5791 F

## Bezugszeichen-Liste

0074549

| | |
|---|---|
| 1 | Arbeitsraum |
| 2 | Halterung |
| 3 | Basis |
| 4 | erstes Teilstück |
| 5 | zweites Teilstück |
| 6 | letztes Teilstück |
| 7, 7a | Greifer- bzw. Werkzeug-Element |
| 8 | Steg von 4 |
| 9 | Steg von 5 |
| 10 | Rohr |
| 11 | Lineartrieb |
| 12 | Stützverbindung |
| 13 | erste Zahnstange |
| 14 | Innenraum des U-Querschnittes |
| 15 | Deckelplatte |
| 16 | zweite Befestigung von 11 |
| 17 | U-förmige Hälfte von 5 |
| 18 | Rohrstück an 5 |
| 19 | vordere Hälfte von 13 |
| 20 | Seitenteil von 4 |
| 21 | Prismenprofil |
| 22 | Stützrollen |
| 23 | Linearlagerhälften |
| 24 | Triebverbindung |
| 25 | Lagernachstelleinrichtung |
| 26 | zweite Zahnstange an 6 |
| 27,27a | Ritzel mit zwei Stufenrädern |
| 28 | Lagerbock für 27 und 25 |
| 29 | Anpressrolle von 25 |
| 30 | Nachstellschraube 30 |
| 31 | Schwinge für 25 |
| 32 | Führungsrollen |
| 33 | Ritzelwelle |
| 34 | Meßgetriebe |

TZS/sln-wa

10.09.1981

Akte 5791 F

- l -

ZAHNRADFABRIK FRIEDRICHSHAFEN

0074549

Aktiengesellschaft

Friedrichshafen

Linearverschieblicher Arbeitsarm, insbesondere
für Handhabungsgeräte

P a t e n t a n s p r ü c h e

1. Linearverschieblicher Arbeitsarm, insbesondere für Handhabungsgeräte im wesentlichen bestehend aus:
- einer einerseits an einer Halterung 2 befestigten Schlittenkonstruktion 4,5, welche an ihrem Ausleger 6 mindestens ein
Greifer - bzw. Werkzeug-Element 7, 7a trägt,
- und welche über einen Lineartrieb 11 gegenüber der Halterung 2
verschieblich ist,
d a d u r c h  g e k e n n z e i c h n e t ,
a) daß der Arbeitsarm 1 aus mehreren auseinander schiebbaren
Teilstücken 4,5,6,7 besteht,
b) von welchen Teilstücken ein erstes 4 an der Halterung 2
festgehalten, ein oder mehrere weitere etwa gleich lange
5 in das erste etwa parallel zur Laufrichtung L der
Schlittenkonstruktion zusammen-schiebbar ausgestaltet sind.

2. Arbeitsarm nach Anspruch 1,
d a d u r c h  g e k e n n z e i c h n e t ,
a) daß der Arbeitsarm 1 in ein letztes, beliebig langes Teilstück 6  mit einem Greifer- bzw. Werkzeug-Element 7 ausläuft, welches über entlang dem Arbeitsarm 1 verlegte Energie- und Steuerleitungen auch unabhängig vom Lineartrieb 11
betätigbar ist,
b) und daß alle Teilstücke 4,5,6,7 durch einen einzigen Lineartrieb 11 gleichzeitig gegenüber der Halterung 2 relativ beweglich sind.

Akte 5791 F

3. Arbeitsarm nach einem der Ansprüche 1 oder 2,
d a d u r c h   g e k e n n z e i c h n e t ,
  a) daß der Arbeitsarm 1 bis zu einer Maximalhublänge H durch
    Addition von Teilhublängen XY stufenlos auseinanderschiebbar ist.

4. Arbeitsarm nach einem der Ansprüche 1 bis 3,
d a d u r c h   g e k e n n z e i c h n e t ,
  a) daß das erste 4 und weitere Teilstücke 5 jeweils im wesentlichen U-förmige, ineinander passende Querschnitte
    aufweisen,
  b) und daß die Teilstücke mit U-förmigen Querschnitten 4,5
    zueinander über eine zwischen ihren einander zugewandten
    Stegen 8,9 angeordnete Triebverbindung 24 eine mechanische Zwangskoppelung aufweisen.

5. Arbeitsarm nach einem der Ansprüche 1 bis 4,
d a d u r c h   g e k e n n z e i c h n e t ,
  a) daß die Triebverbindung 24 mit einer Einrichtung zur Lager-Nachstellbarkeit 25, welche in die Halterung 2 abgestützt ist, ständig in Eingriff ist.

6, Arbeitsarm nach einem der Ansprüche 1 bis 5,
d a d u r c h   g e k e n n z e i c h n e t ,
  a) daß die Triebverbindung 24 aus einem im Innenraum 14
    zwischen U-Querschnitten angeordneten Zahnstangen-Ritzel-
    Getriebe 13, 26, 27 besteht,
  b) und daß dieses Getriebe zwischen aus Rollen-Prismen-Führungen 21, 22, 23 ausgebildeten Linearlagerhälften des
    ersten und des zweiten Teilstückes 4,5 in Laufrichtung L
    mitnehmbar ist.

7. Arbeitsarm nach einem der Ansprüche 1 bis 6,
d a d u r c h   g e k e n n z e i c h n e t ,
  a) daß das zweite Teilstück 5 etwa entsprechend der Länge

Akte 5791 F

zweier Teilstücke eine frei vorkragende an der Halterung 2
festgelegte, erste Zahnstange 13 mit einer zum Steg 9 des
weiteren Teilstückes 6 gerichtete Verzahnung aufweist,

   b) und daß mit dieser Verzahnung 13 ein vom zweiten Teil-
      stück 5 mitnehmbares Ritzel 27 in Eingriff steht, daß
      auch gleichzeitig mit einer zweiten, am weiteren Teil-
      stück 6 angebrachten Zahnstange 26, deren Verzahnung der
      ersten Zahnstange 13 zugewandt ist, etwa über der Länge
      dieses Teilstückes kämmt.


8. Arbeitsarm nach einem der Ansprüche 1 bis 7,
d a d u r c h   g e k e n n z e i c h n e t ,
   a) daß die Verzahnungen der Zahnstangen 13, 26 und des
      Ritzels 27 durch mindestens ein Anpressrolle 29, welche
      im Zwischenraum 14 zwischen dem Steg 8 des zweiten Teilstückes 5 und der ersten Zahnstange 13 quer zur Laufrichtung 11 nachführbar angeordnet sind, ständig spielarm zusammengehalten werden.


9. Arbeitsarm nach einem der Ansprüche 1 bis 8,
d a d u r c h   g e k e n n z e i c h n e t ,
   a) daß der Lineartrieb 11 ein parallel zur ersten Zahnstange
      13 auch in den U-Querschnitt frei vorkragender, einhubiger
      Stellzylinder ist,
   b) und daß der Minimalhub S um den durch ihn das zweite Teil-
      stück 5 in Laufrichtung L mitnehmbar ist, etwa der Länge
      eines halben Teilstücks 4 bzw. 5 entspricht.


10. Arbeitsarm nach einem oder mehreren der Ansprüche
1 bis 9,
d a d u r c h   g e k e n n z e i c h n e t ,
   a) daß mindestens das letzte Teilstück 6 als geschlossenes
      Rohr 10 gestaltet ist, durch welche die Energie und
      Steuerleitungen zum Greifer- bzw. Werkzeug-Element 7 hin-
      durchgeführt sind.


Akte 5791 F.

11. Arbeitsarm nach Anspruch 10,
d a d u r c h   g e k e n n z e i c h n e t ,
   a) daß die Führung 20, 21, 23 zwischen vorletztem und letztem Teilstück 5, 6 in einem das letzte Teilstück 6 und
      die zugehörige Triebverbindung 24 auf etwa halber Teilstücklänge umfassendem Rohrstück 18 eingebaut ist.

12. Arbeitsarm nach Anspruch 11,
d a d u r c h   g e k e n n z e i c h n e t ,
   a) daß das Rohrstück 18 auch die Einrichtung zur Lagernachstellbarkeit 25 sowie von der Ritzelwelle 33 mitbetreib-
      bare Meßgetriebe 34 zur Hub- bzw. Geschwindigkeits-Kontrolle mitüberdeckt.

13. Arbeitsarm nach einem der Ansprüche 1 bis 12,
d a d u r c h   g e k e n n z e i c h n e t ,
   a) daß die Linearlagerhälften 23 Prismenprofile 21 entlang
      den Außenseiten der jeweils kleineren U-Querschnitte
      haben, gegen welche sich auf den Innenseiten der darüberschiebbaren U-Querschnitte Stützrollen 22 anlehnen,
   b) und daß mindestens einige dieser Stützrollen 22 individuell zur Lagerspielreduzierung gegen die Prismenprofile
      21 nachstellbar angeordnet sind.

14. Arbeitsarm nach einem der Ansprüche 1 bis 13,
d a d u r c h   g e k e n n z e i c h n e t ,
   a) daß wenigstens eine der Zahnstangen 13, 26 zur anderen
      abstandsveränderbar befestigt ist und daß das Ritzel 27 aus
      zwei drehfest verbundenen Hälften besteht, von denen jede
      mit einer anderen Zahnstange 13 bzw. 26 kämmt.

Akte 5791 F

FIG.1

FIG.2

**FIG.3**